# EUROPEAN PATENT SPECIFICATION

(11) **EP 3 205 911 B1**
(45) Date of publication and mention of the grant of the patent: **03.04.2019**
(21) Application number: 17382071.3
(22) Date of filing: 13.02.2017
(51) Int. Cl.: F16K 15/03, F16K 27/02

(54) **DUAL PLATE SWING CHECK VALVE**
DOPPELPLATTENRÜCKSCHLAGVENTIL
SOUPAPE DE RETENUE OSCILLANTE À DOUBLE PLAQUE

(30) Priority: 15.02.2016 ES 201630170
(43) Date of publication of application: 16.08.2017
(73) Proprietor: Castflow Valves, S.L., 28970 Humanes de Madrid-Madrid (ES)
(72) Inventor: GALLEGO BUZÓN, Mª del Carmen, 28970 HUMANES DE MADRID-MADRID (ES)
(74) Representative: Urizar Anasagasti, Jesus Maria

(56) References cited:
- CN-U- 202 140 632
- JP-U- H0 488 570
- US-A- 5 392 810
- US-A- 5 819 791
- US-A1- 2013 019 966

## Description

### Object of the invention

The invention relates to a check valve, specifically to dual flap or dual plate swing check valves, both articulated around the central shaft.

This valve is of the type in which the body is not perforated through to the outside, also known in some cases as a retainerless systems; to this effect, the valve body has two diametrically opposite positioners on the inside, each one having two holes, housed in which are, on the one hand the rotation shaft of the valve plates and on the other hand stops that have a dual function, on the one hand limiting the opening of the plates and making sure the opening is symmetrical and that the plates do not rotate; and on the other hand they function as a system for fastening the positioners to the valve body by threading the same to the body.

This system does not require, on the one hand, perforations in the body through to the outside, thereby avoiding leaks through the same, and on the other hand, the fastening system eliminates the need for auxiliary elements, such as screws, nuts, plates, etc., as have been used up to the present.

### Background of the invention

Check valves, also known as non-return valves, have been used for a long time in piping to prevent fluid from traveling in the wrong direction. Among the different check valve models available, the dual plate model is now the most widely used, given that it provides an quick and easy solution to a water hammer, since it has springs which help initiate the closing of the valve, and due to its configuration, it is considered a quick closing valve. These types of valves have articulated plates around a central shaft, which are mounted inside the valve body, originally by means of pins which were inserted from the outside, and currently, by means of both side positioners, inserted in the slots provided in the valve body, which are fastened therein by threading means. Situated above these plates is a stop, made up of a longitudinal element, parallel to, and in the same diametral plane as, the rotation shaft of the plates, or made up of bulges existing on the upper face of said plates which prevent said plates from being situated completely adjacent to each other in the open position; in any case, the lack of perforations in the body to the outside prevents leaks through the same, which is why the current art is progressing in this direction.

In patent literature there is a wide variety of documents related to this type of valve, and among them we have only cited those in which the shaft of the plates is mounted in side spacers inside the valve body, because it is of this type, and, therefore, in the document US5246032 the spacers in which the shaft and the stop are mounted have lower bores 54 through which the fastening thereof to the base of the valve body is effected, in which moreover there are no slots for housing said positioners, which is why the sealing plates have a smaller diameter than the inner valve body. In document DE102007057663, the fastening of the spacers in which the shaft of the plates is mounted is also done at the base of the valve body.

In document US 5819790, the retention of the positioners 12 is done by means of a pair of plates 14, which are retained in place in slots 15 by means of retaining screws 16, which thread in an axial direction to the valve body to each side of the body of the same. In document US2013/0019966, the diametral stop is fastened by means of bushings which define the immobilization point in the valve body. The fastening of the assembly is done by means of screws which thread in an axial direction to the valve body to each side of the same. In the document WO2008126097, fastening is also done in a similar way, by means of a plate 13 which immobilizes the assembly by the face to which the pipe is connected. Document CN202140632 shows a similar configuration in which the spacers 2 are fastened by means of small plates 4 and screws 6 which protrude through the face to which the pipe is connected.

In document CN202884136, the spacers do not fit in slots inside the valve body, but rather are fastened to a piece 31, which in turn is fastened to the valve body, making up the base of the same.

Document CN 104948783 shows a fastening system for the positioners by means of an auxiliary piece (Fig. (3 and 4) in which a single shaft with threaded parts is inserted above an auxiliary piece and with screws that are fastened to the valve body by means an auxiliary piece; said auxiliary piece having a flap to prevent it from becoming detached and moving in the direction of the fluid.

### Description of the invention

The present invention relates to a dual plate swing check valve which provides a more simple mounting process and fewer pieces than any of the aforementioned valves, which also does not have any of the aforementioned drawbacks related to the state of the art. The most noteworthy aspect of this invention is that the fastening system for the positioners to the valve body is carried out by the stops themselves, without the need for auxiliary elements, giving them a dual function.

The valve is made up of a cylindrical body provided with a central rib on which two semicircular plates are supported, which seal the valve with the help of springs. Said plates are mounted with the straight faces facing each other on a common axis on which they rotate symmetrically, such that with the support thereof on the seat valve body, they facilitate the sealing of the valve, while in the opening of the valve said plates take a V-shaped configuration in which the vertex is the rotation shaft and is situated upstream in relation to the direction of the fluid. The blocking of fluid is effected when the upstream flow of the installation is sufficiently reduced to initiate the closure of the same until it is completely sealed.

To carry out the circular closing motion, these semi-circular plates are mounted on a central shaft that is housed in side positioners, which in turn are housed in the valve body in hollows with the same form as said positioners. According to an important characteristic of the invention, said positioners are fastened to the valve body by means of stops which are threaded on the inside to the body, in which threaded bores have previously been machined; carrying out a dual function, on the one hand of acting as a stop to the complete opening of the valve and on the other hand fastening the positioners and therefore the entire actuation mechanism of the same. Therefore, it is a valve of simple construction, since it eliminates the need for any type of auxiliary piece for the fastening of the positioners, using the shaft stop itself for the fastening thereof, by means of threading in the valve body. Moreover, the valve body does not require bores to the outside of the valve for the mounting of the shafts, thereby preventing leaks to the outside, eliminating the need for plugs and gaskets to ensure leak-tightness.

This arrangement can also be used in the construction of valves covered with rubber on the inside, in which case the positioner has a protrusion to ensure the leak-tightness in the contact area between the positioner and the valve body, in order to prevent the fluid from coming into contact with the material of the body; and furthermore, it has an o-ring to ensure leak-tightness between the stop and the valve body. In these types of valves, the body is completely covered with rubber on the inside, with positioners that contain the rotation shaft, which are fastened as in the previously explained base design by means of the stops, thereby preventing the fluid from coming into contact with the valve body.

The mounting and dismounting of the pieces that make up the valve is very easy and does not require any auxiliary elements, such as plates or screws; furthermore, the components are interchangeable, since the valve plates, as well as the spacers, stops and springs are ambidextrous and can therefore function in any position.

This valve can function at high temperatures and with any type of fluid, even corrosive fluids, the entire assembly thereof able to be made out of corrosive-resistant materials, and moreover, the fastening system for the positioners does not have any type of gasket and the configuration of the seat could be with a metal-to-metal seal.

Also noteworthy is that once the positioners are fastened, they remain flush with the face of the valve which is connected to the pipe, which is why this face is free or auxiliary elements, such as plates or screws which could negatively affect the leak-tightness in mounting of the valve to the pipe.

### DESCRIPTION OF THE FIGURES

As a complement to the description being made, and for the purpose of helping to make the characteristics of the invention more readily understandable, this specification is accompanied by a set of drawings which, by way of illustration and not limitation, represent the following.
- Figure 1 is a perspective view of the preferred configuration of the valve with a quarter section view that shows all of the components thereof and the inside of the same.

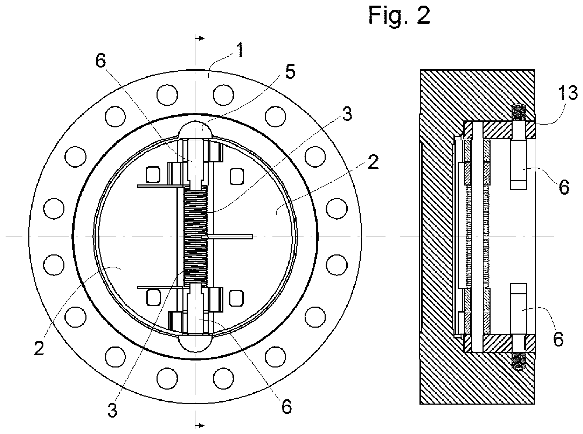

- Figure 2 shows a plan view and a cross-section down the middle of the valve, wherein the inner machining of the body (1) can be seen.

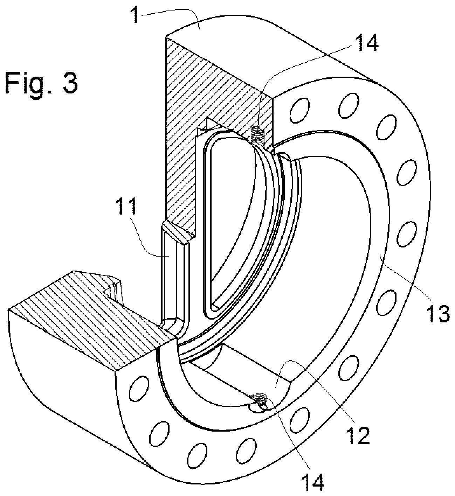

- Figure 3 is a perspective view of the machined body (1).
- Figures 4 and 5 are two phases of the mounting process of the components of the valve, as well as the fastening system for the positioners (5) characteristic of the present invention.

### Preferred embodiment of the invention

The present invention consists of a dual plate swing check valve with a configuration in which the body is not bored through to the outside, thereby ensuring the leak-tightness of the valve. This valve, which is a dual plate swing valve, is made up of a cylindrical and hollow body (1) with a central rib (11) which divides the flow in two, the inside of which includes the following elements that make up the actuation mechanism of the valve:
- Two semi-circular plates (2), the rotation shaft (4) of which is situated in line with and above the rib (11). These plates are situated to form a V-shaped configuration when opening by the effect of the pressure of the surrounding fluid and are situated in the same plane during the sealing, an operation which involves the springs (3) which close said plates, preventing the passage of fluid when the flow upstream of the valve is reduced.
- Two stops (6), situated above said plates (2), axially aligned with each other and forming a diametral plane with the rib (11) and the rotation shaft (4) of the same. These stops delimit the opening of the plates (2) and make sure the opening is symmetrical and that said plates do not rotate.
- Positioners (5) which are housed in hollows (12) having same form as the positioners, provided in the valve body (1) coinciding with the rotation line of the plates (2). In each one of these positioners there is a first hole (51) in correspondence with the rotation shaft (4), which is supported on both in the mounting of the assembly, and a second hole (52) through which one of the stops (6) which delimit the opening of the plates (2) is fastened;

According to one particular feature of the invention, the fastening of each one of the positioners (5) is done in the wall of the bottom of the corresponding hollow (12) by means of a stop (6). To do so, each stop (6) has:
- A threaded end (61) through which the valve body (1) is immobilized, through a threaded bore (14) existing on the bottom of both hollows (12), in correspondence with the second hole (52) existing on the corresponding positioner (5).
- A small step (62) in the housing area in the positioner (5) which butts against the edge of the second hole (52) through which the previous threaded area (61) passes, immobilizing the positioner in the corresponding hollow (12), while the stop (6) is fastened to the valve body (1).
- An area (63) in which at least two parallel faces have been machined, which define a configuration that is suitable for the manipulation and rotation thereof by means of a tool or actuating key.

According to another characteristic of the invention, the positioners (5) that allow the shaft (40) and the valve stops (6) to be fastened, have a cross-section configuration according to a circular segment, in which the curved area coincides with the hollows (12) provided in the inside of the valve body (1), while the flat face is situated perpendicular to the rotation shaft (4) of the plates (2). Likewise, the length of these separators (5) corresponds to the hollows (12) and the position of the second hole (52) to that of the threaded bore (14) on the valve body, such that once the positioners (5) are mounted they remain flush with the face (13) of the valve body to which the pipe is fastened. The lack of fastening elements on the faces connecting to the pipe and the simplicity in the fastening of the positioners (5) and the lack of the gaskets allow it to be used in high temperatures, in the metal-to-metal configuration thereof.

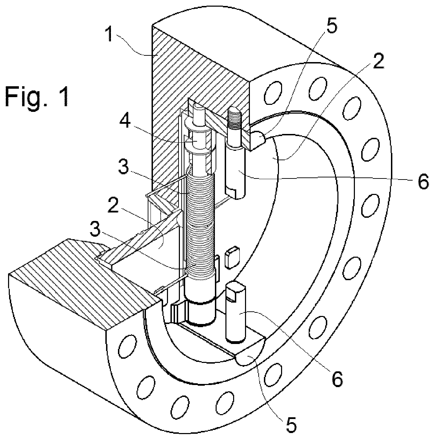

Figure 1 shows a lug-type configuration, in which the valve is mounted directly on the flange of the pipe by means of screws that are threaded directly in threaded bores in the same valve body, but in wafer-type check valves, meaning when the valve is installed between the flanges of the pipe and remains secured by the screws of the same flanges, these areas must have necks in order not to weaken the thickness with said machining. With this configuration, the face mounted to the pipe (13) is does not need auxiliary elements, such as screws or pins, such that it sits perfectly in the mounting on the pipe. Moreover, in the machining process of the body, the finish of the faces that connect to the piping can be done with the positioners (5) fastened by the stops (6) such that there is no discontinuity in the face that connects to the piping.

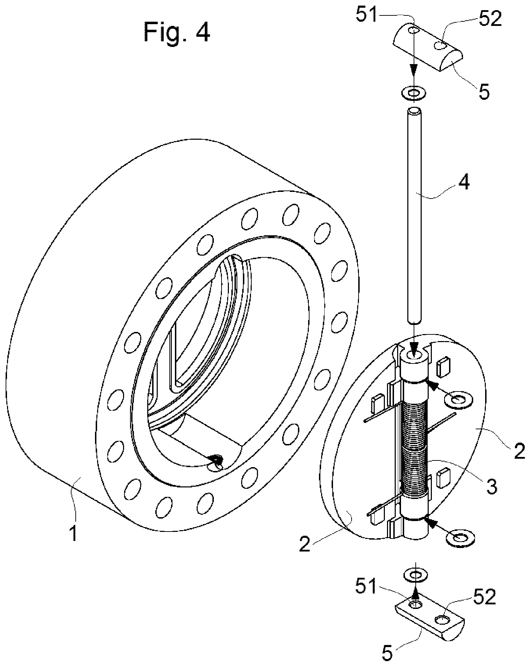

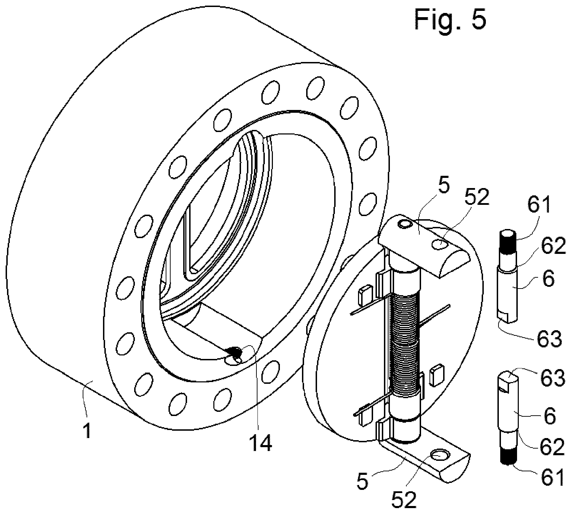

The mounting system is simple: the two facing plates (2) are placed, the bar of the rotation shaft (4) is inserted together with the washers and springs (3), and later the shaft (4) is inserted in the housing (51) of each one of the positioners (5) and the entire assembly is inserted in the housings (12) of the body (1) for the positioners (5), once inserted, it is fixed to the body (1) with the two stops (6), threaded in the valve body, just as shown in figures 4 and 5. Therefore, this valve is easy to mount and dismount and provides great fastening safety when transported, since the positioners (5) remain completely fixed in the mounting by means of the threading of the stops (6) to the valve body (1).

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A dual plate swing check valve made up of a cylindrical and hollow body (1) with a central rib (11) which divides the flow in two, the inside of which comprises:
- semi-circular plates (2), the rotation shaft (4) of which is situated in line and above the rib (11), and which are situated to form a V-shaped configuration when opening by the effect of the pressure of the surrounding fluid, and are situated in the same plane during the sealing, an operation which involves at least one spring (3) which closes said plates, preventing the passage of fluid when the flow upstream of the valve is reduced;
- at least one stop (6), situated above said plates, aligned with the rib (11) and the rotation shaft (4) of the same, delimiting the opening of the plates and making sure that the opening is symmetrical and that the plates do not rotate (2);
- positioners (5), which in turn are housed in hollows (12) with the same form as said positioners on the valve body (1), coinciding with the rotation line of the plates (2), which define a first hole (51) in correspondence with the rotation shaft (4), which is supported on both positioners, and a second hole (52) in which the stop (6) is fastened which delimits the opening of the plates (2);
**characterized in that** the fastening of each one of the positioners (5) is effected on the wall of the bottom of the corresponding hollow (12) by means of a stop (6) which has a threaded end (61) through which the valve body (1) is immobilized, through a threaded bore (14) existing on the bottom of both hollows (12), in correspondence with the second hole (52) existing in the corresponding positioner (5); likewise, each one of the stops (6) has a small step (62) in the housing area in the positioner (5) which butts against the edge of the second hole (52) through which the previous threaded area (61) passes, immobilizing the positioner (5) in the corresponding hollow (12) while the stop (6) is fastened to the valve body (1).

2. The check valve, according to claim 1, **characterized in that** the positioners (5) have a cross-section configuration according to a circular segment, in which the curved area coincides with the hollows (12) provided on the inside of the valve body (1), while the flat face is situated perpendicular to the rotation shaft (4) of the plates (2); likewise, the length thereof corresponds to the hollows (12) and the position of the second hole (52) to that of the threaded bore (14) on the valve body, such that once the positioners (5) are mounted they remain flush with the face (13) of the valve body to which the pipe is fastened.

3. The check valve, according to the preceding claims, **characterized in that** the stops (6) have an area (63) in which at least two parallel faces have been machined, which define a configuration that is suitable for the manipulation and rotation thereof by means of a tool or actuating key.

## Patentansprüche

1. Zweiplatten-Schwenkrückschlagventil, das aus einem zylindrischen und hohlen Körper (1) mit einer zentralen Rippe (11) besteht, die den Strom in zwei Teile teilt, deren Inneres Folgendes umfasst:
- halbkreisförmige Platten (2), deren Rotationswelle (4) in einer Linie und oberhalb der Rippe (11) angeordnet ist und die beim Öffnen durch die Wirkung des Drucks des umgebenden Fluids eine V-förmige Konfiguration bilden und während der Abdichtung in der gleichen Ebene angeordnet sind, ein Vorgang, in dem mindestens eine Feder (3) vorgesehen ist, die diese Platten schließt, wobei der Durchtritt von Fluid verhindert wird, wenn der Strom stromaufwärts des Ventils reduziert wird;
- mindestens einen Anschlag (6), der sich über den Platten befindet und mit der Rippe (11) und der Rotationswelle (4) derselben ausgerichtet ist, wobei die Öffnung der Platten begrenzt wird und sichergestellt wird, dass die Öffnung symmetrisch ist und sich die Platten nicht drehen (2);
- Stellungsregler (5), die wiederum in Hohlräumen (12) mit der gleichen Form wie die Stellungsregler am Ventilkörper (1) untergebracht sind, die mit der Rotationslinie der Platten (2) übereinstimmen, die eine erste Bohrung (51) entsprechend der Rotationswelle (4), die an beiden Stellungsreglern abgestützt ist, und eine zweite Bohrung (52), in der der Anschlag (6) befestigt ist, der die Öffnung der Platten (2) begrenzt, definieren;
**dadurch gekennzeichnet, dass** die Befestigung jedes der Stellungsregler (5) an der Wand des Bodens des entsprechenden Hohlraums (12) mittels eines Anschlags (6) erfolgt, der ein Gewindeende (61) aufweist, durch das der Ventilkörper (1) immobilisiert wird, durch eine auf dem Boden beider Hohlräume (12) vorhandene Gewindebohrung (14), entsprechend der in dem entsprechenden Stellungsregler (5) vorhandenen zweiten Bohrung (52); jeder der Anschläge (6) weist ebenfalls eine kleine Stufe (62) im Gehäusebereich im Stellungsregler (5) auf, die gegen den Rand der zweiten Bohrung (52) stößt, durch die der vorherige Gewindebereich (61) verläuft, wobei der Stellungsregler (5) in dem entsprechenden Hohlraum (12) immobilisiert wird, während der Anschlag (6) am Ventilkörper (1) befestigt ist.

2. Rückschlagventil nach Anspruch 1, **dadurch gekennzeichnet, dass** die Stellungsregler (5) eine Querschnitts-Konfiguration gemäß einem kreisförmigen Segment aufweisen, bei der die gekrümmte Fläche mit den im Inneren des Ventilkörpers (1) vorgesehenen Hohlräumen (12) zusammenfällt, während die ebene Fläche senkrecht zur Rotationswelle (4) der Platten (2) liegt; wobei deren Länge ebenfalls den Hohlräumen (12) und die Lage der zweiten Bohrung (52) der der Gewindebohrung (14) am Ventilkörper entspricht, so dass die Stellungsregler (5) nach der Montage mit der Fläche (13) des Ventilkörpers, an der die Leitung befestigt ist, bündig bleiben.

3. Rückschlagventil nach den vorhergehenden Ansprüchen, **dadurch gekennzeichnet, dass** die Anschläge (6) einen Bereich (63) aufweisen, in dem mindestens zwei parallele Flächen bearbeitet wurden, die eine Konfiguration definieren, die für deren Manipulation und Rotation mittels eines Werkzeugs oder Betätigungsschlüssels geeignet ist.

## Revendications

1. Clapet anti-retour oscillant à double battant constitué d'un corps cylindrique et creux (1) avec une rainure centrale (11) qui sépare le flux en deux, dont l'intérieur comprend :
- des battants semi-circulaires (2), dont l'arbre de rotation (4) est situé en ligne et au-dessus de la rainure (11), et qui sont situés pour former une configuration en forme de V lors de l'ouverture sous l'effet de la pression du fluide environnant, et qui sont situés sur le même plan pendant la fermeture, une opération qui implique au moins un ressort (3) qui ferme lesdits battants, empêchant le passage de fluide lorsque le flux en amont du clapet est réduit ;
- au moins une butée (6), située au-dessus desdits battants, en alignement avec la rainure (11) et l'arbre de rotation (4) de cette dernière, délimitant l'ouverture des battants et garantissant que l'ouverture est symétrique et que les battants ne tournent pas (2) ;
- des positionneurs (5), qui sont à leur tour logés dans des creux (12) avec la même forme que lesdits positionneurs sur le corps du clapet (1), coïncidant avec la ligne de rotation des battants (2), qui définissent un premier trou (51) en correspondance avec l'arbre de rotation (4), qui est supporté sur les deux positionneurs, et un deuxième trou (52) dans lequel la butée (6) est serrée qui délimite l'ouverture des battants (2) ;
**caractérisé en ce que** le serrage de chacun des positionneurs (5) est effectué sur la paroi de la partie inférieure du creux correspondant (12) au moyen d'une butée (6) qui a une extrémité filetée (61) par laquelle le corps du clapet (1) est immobilisé, par un orifice fileté (14) existant sur la partie inférieure des deux creux (12), en correspondance avec le deuxième trou (52) existant dans le positionneur correspondant (5) ; de même, chacune des butées (6) a un petit cran (62) dans la zone de logement dans le positionneur (5) qui bute contre le bord du deuxième trou (52) par lequel la précédente zone filetée (61) passe, immobilisant le positionneur (5) dans le creux correspondant (12) tandis que la butée (6) est serrée au corps du clapet (1).

2. Clapet anti-retour, selon la revendication 1, **caractérisé en ce que** les positionneurs (5) ont une configuration en section transversale selon un segment circulaire, où la zone incurvée coïncide avec les creux (12) prévus à l'intérieur du corps du clapet (1), tandis que la face plate est située perpendiculaire à l'arbre de rotation (4) des battants (2) ; de même, leur longueur correspond aux creux (12) et la position du deuxième trou (52) à celle de l'orifice fileté (14) sur le corps du clapet, de sorte qu'une fois les positionneurs (5) montés ils restent alignés avec la face (13) du corps du clapet auquel le tuyau est serré.

3. Clapet anti-retour, selon les revendications précédentes, **caractérisé en ce que** les butées (6) ont une zone (63) dans laquelle au moins deux faces parallèles ont été usinées, qui définissent une configuration qui est appropriée pour leur manipulation et leur rotation au moyen d'un outil ou clé d'actionnement.
